# EUROPÄISCHE PATENTSCHRIFT

(11) **EP 2 046 544 B1**
(45) Veröffentlichungstag und Bekanntmachung des Hinweises auf die Patenterteilung: **21.09.2016**
(21) Anmeldenummer: 07786432.0
(22) Anmeldetag: 30.07.2007
(51) Int. Cl.: B27F 1/06, B27M 1/08, B65G 15/60, B65G 15/14

(54) **VORRICHTUNG ZUM HERSTELLEN ODER/UND BEARBEITEN VON PANEELEN**
APPARATUS FOR PRODUCING AND/OR PROCESSING PANELS
DISPOSITIF DE FABRICATION ET/OU D'USINAGE DE PANNEAUX

(30) Priorität: 31.07.2006 DE 102006035647
(43) Veröffentlichungstag der Anmeldung: 15.04.2009
(73) Patentinhaber: Kaindl Invest GmbH, 5071 Wals bei Salzburg (AT)
(72) Erfinder: KRALLINGER, Rupert, 5522 St.Martin (AT)
(74) Vertreter: Weickmann & Weickmann PartmbB
(86) Internationale Anmeldenummer: PCT/EP2007/006731
(87) Internationale Veröffentlichungsnummer: WO 2008/014962

(56) Entgegenhaltungen:
- EP-A- 1 413 530
- WO-A-03/062111
- DE-A1- 3 936 924
- DE-C1- 10 114 342

## Beschreibung

Die vorliegende Erfindung betrifft eine Vorrichtung zum Herstellen oder/und Bearbeiten von Paneelen, gemäß dem Oberbegriff des Anspruchs 1. Eine solche Vorrichtung ist aus dem Dokument DE 101 14 342 C1 bekannt.

Vorrichtungen dieser Art sind beispielsweise auf dem Gebiet der Herstellung von Fußbodenpaneelen zur Bearbeitung der Längs- oder/und Querseiten der Paneele bekannt. In einer bekannten Anwendung kommt als Bearbeitungseinrichtung ein Fräswerkzeug zum Einsatz, welches an einer Seite eines von der Transporteinrichtung zugeführten Paneels eine Nut ausbildet und auf der gegenüberliegenden Seite des Paneels eine der Geometrie der Nut entsprechende Feder ausbildet. Die Bearbeitung der Paneelen zur Ausbildung von Nut und Feder erfolgt dabei im Allgemeinen an einer Mehrzahl von Bearbeitungsstationen, welche entlang der Transporteinrichtung verteilt angeordnet sind und von der Transporteinrichtung nacheinander mit Paneelen beschickt werden.

Für den automatisierten Ablauf der Herstellung oder/und Bearbeitung von Paneelen, insbesondere für die zuverlässige und genaue Bearbeitung der Paneele in den Bearbeitungseinrichtungen, ist es von entscheidender Bedeutung, dass die Paneele durch die Transporteinrichtung zuverlässig mit genauer und gleichbleibender Lage und Orientierung den Bearbeitungseinrichtungen zugeführt werden. Bei herkömmlichen Vorrichtungen zum Herstellen oder/und Bearbeiten von Paneelen kommen dabei beispielsweise Kettenförderer zum Einsatz, in welchen eine endlose, umlaufende Kette entlang dem Transportweg geführt ist, deren Kettenglieder einerseits Führungsteile tragen, die zum Führen der Kette in entlang dem Transportweg ausgerichteten Führungsschienen geführt sind, und zum anderen eine Auflagefläche tragen, auf welcher das Paneel aufliegt. Um seitliche Kippbewegungen des transportierten Paneels aus der Horizontalebene heraus zu reduzieren, sind in einer bekannten Weiterentwicklung des Kettenförderers die an den Kettengliedern angebrachten Führungsteile jeweils auf jeder Seite senkrecht zur Transportrichtung verlängert und auf zwei im Abstand voneinander parallel zur Transportrichtung verlaufenden Schienen geführt.

Bei den beiden bekannten Kettenförderern hat sich jedoch im praktischen Einsatz gezeigt, dass es insbesondere beim Transport schmalerer Paneele oder bei größeren Transportgeschwindigkeiten zu deutlichen Abweichungen von der Soll-Lage der Paneele kommt, was schließlich zu einer fehlerhaften Bearbeitung der Paneele in den Bearbeitungseinrichtungen oder gar zu einer Störung des Transports und damit verbundener Stillstandszeit der Vorrichtung führt. Darüber hinaus sind Kettenförderer relativ kompliziert aufgebaut und erfordern aufgrund hoher Reibungskräfte zwischen den Führungsteilen und der Führungsschiene einen relativ hohen Energieaufwand für ihren Antrieb sowie hohe Wartungs- und Instandhaltungskosten aufgrund von Verschleiß.

Höhere Transportgeschwindigkeiten lassen sich durch Riemenförderer erreichen, welche in bekannten Vorrichtungen zum Herstellen oder/und Bearbeiten von Paneelen ebenfalls als Transporteinrichtung zum Einsatz kommen. In den Riemenförderern gleiten zwei Endlosriemen parallel zueinander in Führungsschienen, die entlang dem Transportweg ausgerichtet sind. Die Riemen laufen in einer Führungsnut der Führungsschienen, deren Tiefe geringer ist als die Höhe der Riemen, sodass auf den freiliegenden Abschnitten der Riemen ein zu transportierendes Paneel aufgelegt und durch Reibschluss mitgeführt werden kann.

Zwar lässt sich mit Hilfe der Riemenförderer die Lagegenauigkeit der Paneele insbesondere bei höheren Geschwindigkeiten steigern, jedoch sind derartige Förderer mit hohen Anschaffungskosten verbunden, da die Führungsschienen in einem Extrusionsverfahren mit hoher Genauigkeit entlang ihrer gesamten Länge hergestellt werden müssen und insbesondere auch bei lokalen oder zeitlichen Temperaturschwankungen keinerlei Verformung zeigen dürfen. Die aus diesem Grund mit relativ hoher Materialstärke hergestellten Führungsschienen sind nicht nur teuer und aufgrund ihrer Länge und Breite sehr schwer und unhandlich, sie sind ferner auch nicht dazu geeignet, schmalere Paneele zu transportieren, da aufgrund der Breite der Schienen ein bestimmter Mindestabstand zwischen den parallel geführten Riemen vorgegeben ist.

Darüber hinaus ist auch aufgrund der gegebenen Reibung zwischen den Riemen und den Führungsschienen eine relativ hohe Antriebsleistung für die Bewegung der Riemen notwendig und bei längerem Betrieb ist ein Verschleiß dieser Bauteile unvermeidlich, sodass zu dem auch die Betriebskosten der bekannten Vorrichtung relativ hoch sind. Zwar wurde für die bekannten Riemenförderer bereits vorgeschlagen, die Reibungskraft zwischen den Riemen und den Führungsschienen zu reduzieren, indem die Riemen auf einem in der Führungsnut der Führungsschienen erzeugten Luftkissen geführt werden, jedoch führt die Bereitstellung entsprechender Drucklufteinrichtungen zu einer weiteren Steigerung der Anschaffungs- und Betriebskosten der Vorrichtung.

Eine weitere bekannte Vorrichtung, mit welcher insbesondere auch schmalere Paneele transportiert werden sollen, umfasst nur einen einzigen entlang dem Transportweg geführten Endlosriemen, sowie ein neben dem Transportriemen an der Transporteinrichtung befestigtes Führungsschwert, welches von der Transporteinrichtung senkrecht nach oben steht und in Richtung des Transportwegs ausgerichtet ist. Das Führungsschwert greift in eine Längsnut des zu transportierenden Paneels ein, welche eigens zu diesem Zweck an der Unterseite jedes Paneels eingebracht ist.

Mit einem solchen Führungsschwert lässt sich zwar eine relativ stabile seitliche Führung auch schmalerer Paneele erreichen, jedoch ist bei dieser Lösung ein zusätzlicher Arbeitsschritt des Fräsens der Führungsnut in jedem Paneel erforderlich. Wird in der Unterseite eines Paneels eine solche Führungsnut eingebracht, so muss dazu ferner das auf der Unterseite des Paneels aufgebrachte Gegenzugpapier durchschnitten werden, welches daraufhin weitestgehend seine Wirkung zur Stabilisierung der planaren Plattenform des Paneels verliert, sodass es zu einem Schüsseln des Paneels aufgrund der Spannung des auf seiner Oberseite aufgebrachten Laminats kommt.

Die Druckschrift DE-C-10114342 offenbart eine Vorrichtung zum Herstellen oder/und Bearbeiten von Paneelen mit den Merkmalen des Oberbegriffs des Anspruchs 1. Die bekannte Vorrichtung umfasste eine Transporteinrichtung mit zwei Doppelriemenfördermitteln, zwischen denen die Paneele aufgenommen und entlang eines Fräswerkzeugs geführt werden.

Ferner offenbart die EP-A-1413530 eine Heizplattenpresse, umfassend eine Transporteinrichtung mit einem Endlosriemen, welcher zwischen den Umlenkeinrichtungen durch einer Mehrzahl von Führungsrollen unterstützt ist.

Vor diesem Hintergrund ist es Aufgabe der vorliegenden Erfindung, eine Vorrichtung der eingangs genannten Art bereitzustellen, welche Paneele, insbesondere auch schmalere Paneele, zuverlässig und mit hoher Positionsgenauigkeit entlang dem Transportweg transportiert und welche mit höherer Wirtschaftlichkeit einsetzbar ist.

Gemäss der vorliegenden Erfindung wird diese Aufgabe gelöst durch eine Vorrichtung gemäß Anspruch 1.

Wenn in der vorliegenden Beschreibung und den zugehörigen Ansprüchen allgemeine Positionsangaben, wie etwa "oben", "unten", "seitlich" oder "hintereinander" usw., verwendet werden, so beziehen sich diese Angaben auf die Konstruktion und den Aufbau einer Vorrichtung, in welcher die Paneeie im Wesentlichen horizontal transportiert werden, d.h. derart, dass ihre Sichtflächen im Wesentlichen in einer horizontalen Ebene liegen. Selbstverständlich sollen zum Gegenstand der Erfindung auch Vorrichtungen gehören, in denen Paneele in einer anderen Orientierung transportiert werden, wobei die oben genannten Positionsangaben sich dann auf die Sichtfläche der zu transportierenden Paneele als gedachte horizontale Ebene beziehen.

In der erfindungsgemäßen Vorrichtung kann ein zu transportierendes Paneel von den beiden Doppelriemenfördermitteln jeweils zuverlässig zwischen dem oberen Endlosriemen und dem unteren Endlosriemen aufgenommen und durch den beidseitigen Reibschluss sicher entlang dem Transportweg fortbewegt werden. Das transportierte Paneel liegt dann gleichzeitig an zwei oberen Endlosriemen und zwei unteren Endlosriemen an und kann auf diese Weise während des Transports stabil in einer Paneelebene, vorzugsweise einer Horizontalebene, gehalten werden.

Nach einem wichtigen Merkmal der Erfindung ist wenigstens einer der Endlosriemen an seinem Transporttrumm mittels einer Mehrzahl von zwischen den Umlenkeinrichtungen angeordneten Führungsrollen geführt. Die bei der Riemenführung auftretenden Reibungsverluste werden auf diese Art deutlich reduziert und sind bei der erfindungsgemäßen Vorrichtung im Bereich des Transporttrumms des betreffenden Endlosriemens somit im Wesentlichen auf die geringen Reibungsverluste durch Rollreibung an den Führungsrollen beschränkt. Dementsprechend geringer ist die zur Bewegung des Endlosriemens notwendige Antriebsleistung und der an den Bauteilen der Transporteinrichtung auftretende Verschleiß. Somit können die anfallenden Betriebskosten gesenkt und die Wirtschaftlichkeit der Vorrichtung gesteigert werden.

Die erfindungsgemäße Führung des mindestens einen Endlosriemens über die Führungsrollen ermöglicht ferner den zuverlässigen Betrieb der Vorrichtung auch bei höheren Transportgeschwindigkeiten, ohne dass dabei ein zu hoher Verschleiß, eine zu hohe Leistungsaufnahme oder zu hohe Positionsungenauigkeiten in Kauf genommen werden müssten. Auch auf den oben im Zusammenhang mit dem Stand der Technik beschriebenen Einsatz eines Führungsschwerts und das damit verbundene Fräsen einer Führungsnut in der Unterseite der Paneele kann in der erfindungsgemässen Vorrichtung verzichtet werden.

Betreffend den Herstellungsaufwand und die damit verbundenen Anschaffungskosten der erfindungsgemässen Vorrichtung kann festgestellt werden, dass sich Führungsrollen auf konstruktiv einfache Weise herstellen und an einem Rahmen der Transporteinrichtung anbringen lassen und insbesondere auf die Bereitstellung von mit hoher Präzision zu extrudierenden Schienenprofilen verzichtet werden kann.

Der Einsatz einer Mehrzahl von Führungsrollen weist im praktischen Einsatz der Vorrichtung ferner überraschende Vorteile im Hinblick auf die Präzision der Riemenführung auf. So ist es etwa möglich, die Lager einzelner Führungsrollen oder Gruppen von Führungsrollen bei der Erstmontage oder nach einer gewissen Betriebsdauer nachzujustieren, um bestimmte Lageabweichungen aufgrund einer lokalen oder zeitlichen Temperaturveränderung, aufgrund von Fertigungstoleranzen oder aufgrund von Verschleiss auszugleichen.

In einer bevorzugten Ausführungsform der Erfindung ist in wenigstens einem der beiden Doppelriemenfördermittel die wenigstens eine Rollenkassette an dem Doppelriemen-fördermittel angebracht. Möglich ist dabei auch, dass in wenigstens einer Rollenkassette eine Mehrzahl der Führungsrollen, vorzugsweise zwei Führungsrollen gelagert sind. Die Lagerung von Führungsrollen in Rollenkassetten bietet den Vorteil, dass die Führungsrollen gemeinsam mit einem die Führungsrollen drehbar lagernden Lager, sozusagen als Baugruppe, an dem Doppelriemenfördermittel montierbar und/oder demontierbar sind. Einerseits ist es auf diese Weise möglich, ein Doppelriemenfördermittel mit geringem Aufwand mit einer Mehrzahl von Führungsrollen auszustatten, andererseits ist eine relativ unkomplizierte Demontage der Führungsrollen mitsamt ihrer zugeordneten Lager möglich, falls ein Austausch dieser Bauteile notwendig ist.

Die Führungsrollen weisen eine umlaufende Nut auf, insbesondere eine Nut mit im Wesentlichen rechteckigem Querschnitt, um darin den Endlosriemen aufzunehmen. Durch eine solche Nut kann der Endlosriemen zwischen den Seitenwänden der Nut sicher geführt und auch bei hohen Geschwindigkeiten stets parallel zum Transportweg gehalten werden.

Die bereits angesprochene Möglichkeit der individuellen Einstellung der einzelnen Führungsrollen kann auf einfache Weise dadurch realisiert werden, dass wenigstens eines der beiden Doppelriemenfördermittel einen Rahmen und eine am Rahmen montierte oder ausgebildete Rolleneinstelleinrichtung aufweist, mittels welcher Lage oder/und Orientierung der Rollenachse wenigstens einer der Führungsrollen in Bezug auf den Rahmen einstellbar ist. Um dabei den Arbeitsaufwand zur Justierung der einzelnen Rollen in vertretbaren Grenzen zu halten, kann die Rolleneinstelleinrichtung dazu eingerichtet sein, die Rollenachsen einer Mehrzahl von Führungsrollen gleichzeitig zu verstellen. Die Führungsrollen können insbesondere in mehreren Gruppen entlang dem Transportweg verteilt angeordnet sein, wobei dann jeder Gruppe von Führungsrollen eine Rolleneinstelleinrichtung zugeordnet sein kann, um die Rollenachsen der dieser Gruppe zugeordneten Führungsrollen gleichzeitig zu verstellen.

Wenn in der oben beschriebenen Weise wenigstens eine der Führungsrollen in einer Rollenkassette gelagert ist, wird ferner vorgeschlagen, die Lage oder/und die Orientierung der wenigstens einen Rollenkassette einstellbar zu gestalten. Mit einer derartigen Rolleneinstelleinrichtung ist somit eine Rollenkassette zu Einstellzwecken bewegbar, was eine einfache und sehr effektive Möglichkeit darstellt, die Rollenachsen einer Mehrzahl von Führungsrollen gleichzeitig zu verstellen.

Die erfindungsgemässe Vorrichtung eignet sich insbesondere auch für die Verarbeitung von schmaleren Paneelen, da die verwendeten Führungsrollen konstruktiv einfach und von geringer Breite sein können und somit die beiden Doppelriemenfördermittel in lateraler Richtung sehr nahe aneinander angeordnet sein können. Um die Verarbeitung schmalerer Paneele weiter zu fördern, und insbesondere auch Paneele mit einer Breite unterhalb von. 115 mm zuverlässig transportieren zu können, wird in einer Weiterbildung der Erfindung vorgeschlagen, dass die Breite der Endlosriemen, gemessen in einer Richtung orthogonal zum Transportweg und parallel zu einer Paneelebene, kleiner als ungefähr 3 cm ist, bevorzugt zwischen ungefähr 2,5 cm und ungefähr 1 cm liegt, noch bevorzugter ungefähr 1,5 cm beträgt.

Als weitere Maßnahme, um die minimale Breite der sicher transportierbaren Paneelen weiter zu reduzieren, kann der Abstand zwischen den beiden oberen Endlosriemen der beiden Doppelriemenfördermittel oder/und der Abstand zwischen den beiden unteren Endlosriemen der beiden Doppelriemenfördermittel in den Transporttrumms der Endlosriemen auf einen Wert von weniger als ungefähr 5 mm einstellbar sein, vorzugsweise auf einen Wert zwischen ungefähr 3 mm und ungefähr 0,5 mm und noch bevorzugter auf einen Wert von ungefähr 1 mm. Die erfindungsgemäße Vorrichtung ermöglicht dann bei Bedarf auch den Transport von Paneelen mit einer Breite von nur ungefähr 85 mm.

Besonders flexibel einsetzbar ist die erfindungsgemäße Vorrichtung, wenn ein Abstand zwischen den beiden Doppelriemenfördermitteln verstellbar ist. Die Vorrichtung lässt sich dann nach Bedarf an einen bestimmten Typ herzustellender bzw. zu bearbeitender Paneele anpassen.

Wie bereits angesprochen wurde, weist die erfindungsgemäße Vorrichtung eine verbesserte Wirtschaftlichkeit auch deshalb auf, weil geringfügige Lageveränderungen der einzelnen Führungsrollen aufgrund von Temperaturschwankungen durch eine Nachjustierung einzelner Rollen ausgeglichen werden können und somit die Reibungsverluste der Riemenführung stets auf einem minimalen Wert gehalten werden können. Da es für eine möglichst leichtgängige Riemenführung im Wesentlichen nur auf die Relativpositionierung der Führungsrollen bzw. Gruppen von Führungsrollen untereinander ankommt, kann zur weiteren Vereinfachung der Vorrichtung eine Führungsrolle oder eine Gruppe von Führungsrollen ortsfest zum Doppelriemenfördermittel gehalten sein und nur die restlichen Führungsrollen bzw. Gruppen von Führungsrollen sind in ihrer Lage oder/und Orientierung verstellbar.

Gleichermaßen kann eines der Doppelriemenfördermittel mit einem Träger der Vorrichtung über wenigstens eine Langlochkopplung verbunden sein, wobei sich wenigstens ein Langloch der Langlochkopplung im Wesentlichen parallel zum Transportweg erstrecken kann. Somit können auch Temperaturausdehnungen eines Rahmens des Doppelriemenfördermittels durch die Langlochkopplungen ausgeglichen werden und führen nicht zu inneren Spannungen in dem Doppelriemenfördermittel und somit zu einer Verformung der Führung des Endlosriemens, wodurch einer weiteren Quelle möglicher Reibungsverluste entgegengewirkt werden kann.

Besonders vorteilhaft findet die vorliegende Erfindung Anwendung in einer Vorrichtung, in welcher die Bearbeitungseinrichtung wenigstens eine Fräseinrichtung zum Fräsen einer Längsseite oder/und einer Querseite eines Paneels aufweist. Solche Fräsarbeiten müssen mit besonders hoher Genauigkeit durchgeführt werden, um eine möglichst ebene, stufenfreie Sichtfläche der später aneinandergefügten Paneele sicherzustellen, sodass die Vorteile einer zuverlässigen und genauen Führung der Paneele durch die erfindungsgemäßen Maßnahmen bei einer solchen Vorrichtung besonders zum Tragen kommen.

Die vorliegende Erfindung wird nachfolgend anhand einer bevorzugten Ausführungsform unter Bezugnahme auf die beigefügten Zeichnungen näher erläutert.
- Fig. 1: zeigt eine Seitenansicht einer Vorrichtung zum Herstellen oder/und Bearbeiten von Paneelen gemäß einer ersten Ausführungsform der Erfindung.
- Fig. 2: zeigt detaillierter einen vergrößerten Ausschnitt der Darstellung von Fig. 1.
- Fig. 3: zeigt eine Stirnseitenansicht der in Fig. 1 und 2 dargestellten Vorrichtung.
- Fig. 4: zeigt schematisch eine Rollenkassette in einer Schnittdarstellung gemäß einer Linie IV-IV in Fig. 2.

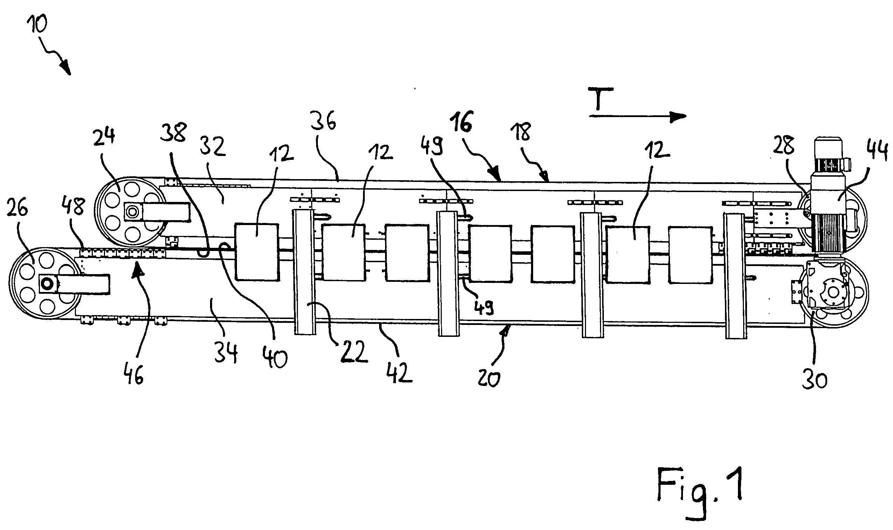

In Fig. 1 ist eine erfindungsgemäße Vorrichtung zum Herstellen oder/und Bearbeiten von Paneelen allgemein mit 10 bezeichnet, in welcher herzustellende bzw. zu bearbeitende Paneele mittels einer noch näher zu beschreibenden Transporteinrichtung in einer Transportrichtung T transportiert und auf diese Weise nacheinander mehreren Bearbeitungsstationen 12 zugeführt werden, welche in Fig. 1 nur symbolhaft dargestellt sind. Die Bearbeitungsstationen 12 können beispielsweise Fräswerkzeuge sein, welche an Längs- oder Querseiten der Paneele eine Nut oder eine Feder ausbilden, sie können aber auch Positioniereinrichtungen sein, welche eine für eine nachfolgende Bearbeitungsstation notwendige genaue Positionierung der Paneele durchführen.

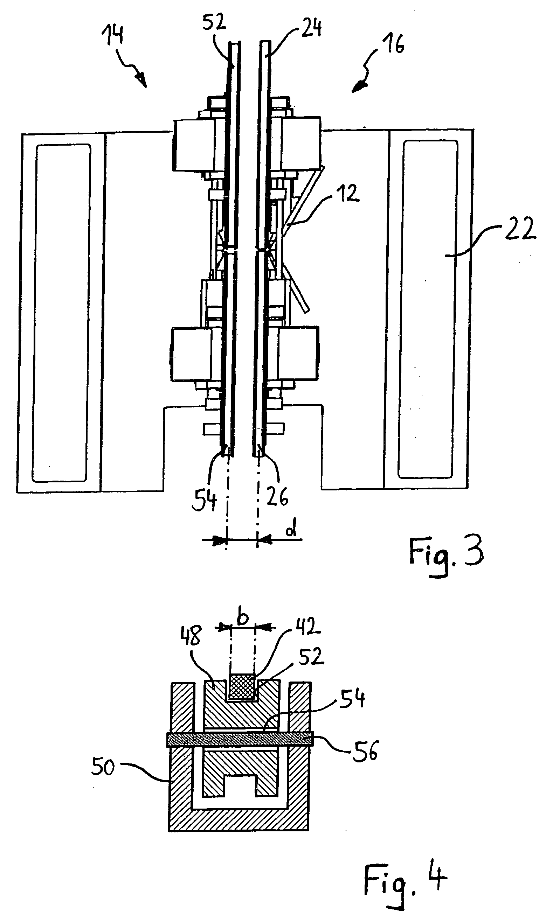

Um die Paneele den einzelnen Bearbeitungsstationen 12 zuzuführen, weist eine Transporteinrichtung der Vorrichtung 10 zwei parallel zueinander verlaufende, nebeneinander angeordnete Doppelriemenfördermittel 14, 16 auf, von welchen in Fig. 1 nur das in Transportrichtung rechte Doppelriemenfördermittel 16 sichtbar ist, während das linke Doppelriemenfördermittel 14 von diesem verdeckt ist (vgl. auch Fig. 3). Da die beiden Doppelriemenfördermittel 14, 16 in ihren wesentlichen Funktionselementen übereinstimmen oder symmetrisch zueinander aufgebaut sind, kann sich die nachfolgende Beschreibung auf das rechte Doppelriemenfördermittel 16 beschränken.

Das Doppelriemenfördermittel 16 umfasst einen oberen Riemenförderer 18 und einen darunter angeordneten unteren Riemenförderer 20, welche beide in Transportrichtung T orientiert an einem ortsfesten Träger 22 der Vorrichtung 10 befestigt sind. Beiden Riemenförderer 18, 20 weisen - bezüglich der Transportrichtung T - jeweils eine stromaufwärtige Umlenkrolle 24 bzw. 26 und eine stromabwärtige Umlenkrolle 28 bzw. 30 auf. Die Umlenkrollen 24, 28 des oberen Riemenförderers 18 sind an den gegenüberliegenden Enden eines oberen Rahmens 32 befestigt, während die Umlenkrollen 26, 30 des unteren Riemenförderers 20 an den gegenüberliegenden Enden eines unteren Rahmens 34 befestigt sind.

Um die Umlenkrollen 24, 28 des oberen Riemenförderers 18 läuft ein oberer Riemen 36, wobei von den beiden zwischen den Umlenkrollen 24, 28 gebildeten Trumms das untere Trumm ein Transporttrumm 38 für die Paneele bildet. In entsprechender Weise läuft um die beiden Umlenkrollen 26, 30 des unteren Riemenförderers 20 ein unterer Endlosriemen 42 und bildet zwischen den Umlenkrollen 26, 30 ein unteres und ein oberes Trumm, von welchen das obere Trumm 40 ein Transporttrumm 40 für die Paneele bildet. Der obere Rahmen 32 und der untere Rahmen 34 sind an dem gemeinsamen Träger 22 so befestigt, dass ein zu transportierendes Paneel zwischen dem Transportrumm 38 des oberen endlosen Riemens 36 und dem Transporttrumm 40 des unteren Endlosriemens 42 aufgenommen und mitgeführt werden kann.

Die stromabwärtigen Umlenkrollen 28, 30 sind jeweils mit einer Antriebseinrichtung 44 verbunden, mit welcher die Umlenkrollen 28, 30 in Drehbewegung und somit die Endlosriemen 36, 42 in Umlaufbewegung versetzt werden können. Allgemein ist es bevorzugt, wenn die Umlenkrollen an ihren Laufflächen jeweils mit einer spezielleren Gummierung versehen sind, um eine bessere Riemenhaftung zu erreichen. Auf diese Weise kann die Führung der Riemen durch die Umlenkrollen sowie die Kraftübertragung von der Antriebseinheit 44 über die Umlenkrollen auf die Riemen noch zuverlässiger erfolgen.

In Fig. 1. ist ferner erkennbar, dass der die Vorrichtung 10 abstützende Träger 22 insgesamt vier Pfosten aufweist, so dass die Rahmen 32, 34 der Riemenförderer 18, 20 jeweils an vier Stellen entlang der Transportrichtung T am Träger 22 abgestützt sind. Die Verbindung zwischen den Rahmen 32, 34 und den Pfosten des Trägers 22 ist dabei jeweils über eine Langlochkopplung 49 realisiert, so dass Längenänderungen der Rahmen auf Grund von Temperaturänderungen durch eine Verschiebung der Befestigung innerhalb der Langlöcher 49 aufgenommen werden kann und somit nicht zu inneren Spannungen und Deformationen der Rahmen 32, 34 führen kann.

In der Ausführungsform nach Fig. 1 ist das Transporttrumm 40 des unteren Endlosriemens 42 über eine Führungsrollengruppe 46 geführt, in welcher eine Mehrzahl von Führungsrollen 48 zwischen den Umlenkrollen 26, 30 in Transportrichtung T hintereinander angeordnet sind. Wenngleich in Fig. 1 aus Gründen der Übersichtlichkeit nur eine Führungsrollengruppe 46 dargestellt ist, so umfasst die in den Figuren gezeigte Ausführungsform eine Mehrzahl von Führungsrollengruppen 46, welche entlang der Transportrichtung T über die Gesamtlänge der Vorrichtung 10 verteilt angeordnet sind. Somit ist es möglich, den unteren Endlosriemen 42 in mehreren Abschnitten entlang des Transporttrumms 40 sicher abzustützen und genau zu führen. Die Anordnung von Führungsrollen 48 oder Führungsrollengruppen 46 ist natürlich ebenso für den oberen Riemenförderer 18 möglich.

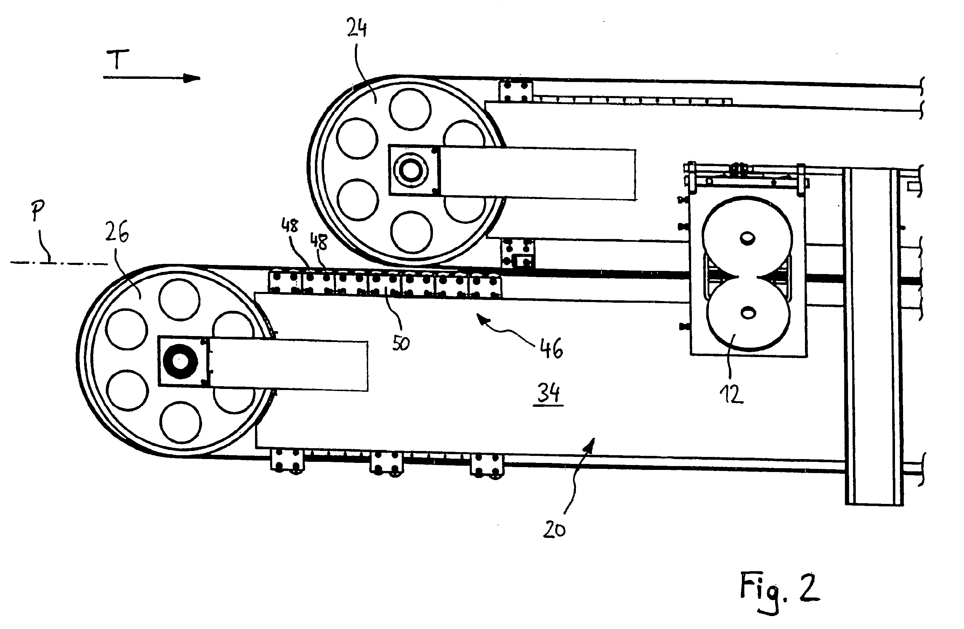

In der vergrößerten Darstellung der Fig. 2 ist die Führungsrollengruppe 46 deutlicher zu erkennen. Sie umfasst insgesamt sieben Rollenkassetten 50, wobei in jeder Rollenkassette 50 zwei Führungsrollen 48 in Transportrichtung T hintereinander angeordnet sind. Die Führungsrollen 48 sind in den Rollenkassetten 50 jeweils drehbar gelagert, wobei ihre Rollendrehachsen senkrecht zur Transportrichtung T und parallel zu einer Paneelenebene, welche im Allgemeinen eine Horizontalebene ist, orientiert sind.

Die Rollenkassetten 50 sind an dem Rahmen 34 des unteren Riemenförderers durch ein geeignetes, verstellbares Anbringungssystem angebracht, so dass die Rollenkassetten 50 betriebsmäßig fest mit dem Rahmen 34 verbunden sind, bei Bedarf jedoch hinsichtlich ihrer Lager oder/und ihrer Orientierung verstellbar sind. Für diesen Zweck können dem Fachmann an sich bekannte Langlochverbindungen, Keilverbindungen oder aufwändigere Verstellmechanismen Anwendung finden. Alternativ oder zusätzlich kann ferner ein Mechanismus vorgesehen sein, um sämtliche Rollenkassetten 50 der Führungsrollengruppe 46 gemeinsam zu verstellen.

Die Vorrichtung 10 kann besonders vorteilhaft für die Herstellung oder/und Bearbeitung von schmaleren Paneelen eingesetzt werden. In der Stirnansicht der Fig. 3 ist der Aufbau der Vorrichtung 10 aus den beiden nebeneinander angeordneten Doppelriemenfördermitteln 14, 16 illustriert. Das in Fig. 3 linke Doppelriemenfördermittel 14 umfasst in Analogie zu dem rechten Doppelriemenfördermittel 16 eine obere stromaufwärtige Umlenkrolle 52 und eine untere stromaufwärtige Umlenkrolle 54 sowie in Fig. 3 nicht erkennbare obere und untere stromabwärtige Umlenkrollen. Die Transporttrumms der beiden Endlosriemen des linken Doppelriemenfördermittel 14 weisen dann von den Transporttrumms 38 bzw. 40 des rechten Doppelriemenfördermittels jeweils einen Abstand d auf.

Die Vorrichtung 10 verfügt über eine in den Figuren nicht dargestellte Verstelleinrichtung, um die Doppelriemenfördermittel 14, 16 aufeinander zu und voneinander weg zu bewegen, um so den Abstand d entsprechend einem zu verarbeitenden Paneelentyp verstellen zu können.

In Fig. 4 ist schematisch ein Querschnitt durch eine Rollenkassette 50 gemäß einer Linie IV-IV in Fig. 2 dargestellt. Zu erkennen ist, dass die in der Rollenkassette 50 gelagerte Führungsrolle 48 eine ihren Umfang umlaufende, im Querschnitt in etwa rechteckförmige Nut 52 aufweist, um darin den im Querschnitt ebenfalls im Wesentlichen rechteckförmigen Endlosriemen 42 mit einer orthogonal zur Transportrichtung T gemessenen Breite b aufzunehmen.

Mittels eines Lagerabschnitts 54 ist die Führungsrolle 48 drehbar an einer Lagerwelle 56 gelagert, welche an ihren beiden gegenüberliegenden Enden fest in den Wänden der Rollenkassette 50 verankert ist.

## Patentansprüche

1. Vorrichtung (10) zum Herstellen oder/und Bearbeiten von Paneelen, umfassend eine Transporteinrichtung zum Transportieren von Paneelen entlang einem Transportweg sowie eine Bearbeitungseinrichtung (12) zum Bearbeiten der Paneele, während deren Bewegung durch die Transporteinrichtung,
wobei die Transporteinrichtung zwei Doppelriemenfördermittel (14, 16) mit jeweils einem oberen Endlosriemen (36) und einem unteren Endlosriemen (42) umfasst, die jeweils ein zum Transportweg im Wesentlichen paralleles Transporttrumm (38, 40) aufweisen und an den beiden Enden des Transporttrumms (38, 40) jeweils durch Umlenkeinrichtungen (24, 26, 28, 30) umgelenkt sind,
wobei die oberen Endlosriemen (36) beider Doppelriemenfördermittel (14, 16) ein zu transportierendes Paneel auf dessen oberer Flächenseite berühren und die unteren Endlosriemen (42) beider Doppelriemenfördermittel (14, 16) das Paneel auf dessen unterer Flächenseite berühren,
**dadurch gekennzeichnet, dass** wenigstens einer der Endlosriemen (36, 42) an seinem Transporttrumm (38, 40) mittels einer Mehrzahl von zwischen den Umlenkeinrichtungen (24, 26, 28, 30) angeordneten Führungsrollen (48) geführt ist, und
dass in wenigstens einer Rollenkassette (50) eine Mehrzahl der Führungsrollen (48), vorzugsweise zwei Führungsrollen (48), gelagert sind und
dass die Führungsrollen (10) eine umlaufende Nut (52) zur Aufnahme der Endlosriemen (36, 42) aufweisen.

2. Vorrichtung (10) nach Anspruch 1, **dadurch gekennzeichnet, dass** in wenigstens einem der beiden Doppelriemenfördermittel (14, 16) die wenigstens eine Rollenkassette (50) an dem Doppelriemenfördermittel (14, 16) angebracht ist.

3. Vorrichtung (10) nach einem der vorhergehenden Ansprüche, **dadurch gekennzeichnet, dass** wenigstens eines der beiden Doppelriemenfördermittel (14, 16) einen Rahmen (32, 34) und eine am Rahmen (32, 34) montierte oder ausgebildete Rolleneinstelleinrichtung aufweist, mittels welcher Lage oder/und Orientierung der Rollenachse (56) wenigstens einer der Führungsrollen (48) in Bezug auf den Rahmen (32, 34) einstellbar ist.

4. Vorrichtung (10) nach Anspruch 3, **dadurch gekennzeichnet, dass** die Rolleneinstelleinrichtung dazu eingerichtet ist, die Rollenachsen (56) einer Mehrzahl von Führungsrollen (48) gleichzeitig zu verstellen.

5. Vorrichtung (10) nach Anspruch 3 oder 4 sowie nach Anspruch 2, **dadurch gekennzeichnet, dass** die Rolleneinstelleinrichtung dazu eingerichtet ist, Lage oder/und Orientierung wenigstens einer Rollenkassette (50) einzustellen.

6. Vorrichtung (10) nach einem der vorhergehenden Ansprüche, **dadurch gekennzeichnet, dass** die Breite der Endlosriemen (36, 42), gemessen in einer Richtung orthogonal zum Transportweg und parallel zu einer Paneelebene (P), kleiner als ungefähr 3 cm ist, bevorzugt zwischen ungefähr 2,5 cm und ungefähr 1 cm liegt, noch bevorzugter ungefähr 1,5 cm beträgt.

7. Vorrichtung (10) nach einem der vorhergehenden Ansprüche, **dadurch gekennzeichnet, dass** ein Abstand (d) zwischen den beiden Doppelriemenfördermitteln (14, 16) verstellbar ist.

8. Vorrichtung (10) nach einem der vorhergehenden Ansprüche, **dadurch gekennzeichnet, dass** der Abstand (d) zwischen den beiden Transporttrumms (38) der oberen Endlosriemen (36) der beiden Doppelriemenfördermittel (14, 16) oder/und der Abstand (d) zwischen den beiden Transporttrumms (40) der unteren Endlosriemen (42) der beiden Doppelriemenfördermittel (14, 16) auf einen Wert von weniger als ungefähr 5 mm einstellbar ist, vorzugsweise auf einen Wert zwischen ungefähr 3 mm und ungefähr 0,5 mm und noch bevorzugter auf einen Wert von ungefähr 1 mm.

9. Vorrichtung (10) nach einem der vorhergehenden Ansprüche, **dadurch gekennzeichnet, dass** ein/der Rahmen (32, 34) wenigstens eines der Doppelriemenfördermittel (14, 16) mit einem Träger (22) der Vorrichtung (10) über wenigstens eine Langlochkopplung (49) verbunden ist, wobei sich wenigstens ein Langloch (49) der Langlochkopplung im Wesentlichen parallel zum Transportweg erstreckt.

10. Vorrichtung (10) nach einem der vorhergehenden Ansprüche, **dadurch gekennzeichnet, dass** die Bearbeitungseinrichtung (12) wenigstens eine Fräseinrichtung (12) zum Fräsen einer Längsseite oder/und einer Querseite eines Paneels aufweist.

## Claims

1. Device (10) for producing or/and processing panels, comprising a transport device for transporting panels along a transport path as well as a processing device (12) for processing the panel, during its movement through the transport device,
wherein the transport device comprises two double-belt conveying means (14, 16), each with an upper endless belt (36) and a lower endless belt (42), which each have a transport track (38, 40) essentially parallel to the transport path and are each deflected by deflecting arrangements (24, 26, 28, 30) at the two ends of the conveyor track (38, 40),
wherein the upper endless belts (36) of both double-belt conveying means (14, 16) are in contact with the upper surface side of a panel which is to be transported and the bottom endless belts (42) of both double-belt conveying means (14, 16) are in contact with the bottom surface side of the panel, **characterized in that** at least one of the endless belts (36, 42) has its conveyor track (38, 40) guided by means of a plurality of guide rollers (48) arranged between the deflecting arrangements (24, 26, 28, 30), and
that in at least one roller cassette (50) a plurality of the guide rollers (48), preferably two guide rollers (48) are mounted
and
that the guide rollers (10) comprise a circumferential groove (52) for receiving the endless belts (36, 42).

2. Device (10) according to claim 1, **characterized in that** in at least one of the two double belt conveyor means (14, 16) the least one roller cassette (50) is mounted at the double belt conveyor means (14, 16).

3. Device (10) according to one of the preceding claims, **characterized in that** at least one of the two double belt conveyor means (14, 16) comprises a frame (32, 34) and a roller adjusting device mounted or formed at the frame (32, 34) by means of which the position or/and orientation of the roller axle (56) of at least one of the guide rollers (48) is adjustable in relation to the frame (32, 34).

4. Device (10) according to claim 3, **characterized in that** the roller adjusting device is adapted to simultaneously adjust the roller axles (56) of a plurality of guide rollers (48).

5. Device (10) according to claim 3 or 4 as well as claim 2, **characterized in that** the roller adjusting device is adapted to adjust the position or/and orientation of at least one roller cassette (50).

6. Device (10) according to one of the preceding claims, **characterized in that** the width of the endless belts (36, 42), measured in a direction orthogonal to the transport path and parallel to a panel plane (P), is smaller than about 3 cm, preferably is between about 2.5 cm and about 1 cm, more preferably about 1.5 cm.

7. Device (10) according to one of the preceding claims, **characterized in that** a distance (d) between the two double belt conveyor means (14, 16) is adjustable.

8. Device (10) according to any one of the preceding claims, **characterized in that** the distance (d) between the two conveyor run portions (38) of the upper endless belts (36) of the two double belt conveyor means (14, 16) or/and the distance (d) between the two conveyor run portions (40) of the lower endless belts (42) of the two double belt conveyor means (14, 16) is adjustable to a value of less than about 5 mm, preferably to a value between about 3 mm and about 0.5 mm and more preferably to a value of about 1 mm.

9. Device (10) according to any one of the preceding claims, **characterized in that** a/the frame (32, 34) of at least one of the double belt conveyor means (14, 16) is coupled to a carrier (22) of the device (10) via at least one elongated hole coupling (49), wherein at least one elongated hole (49) of the elongated hole coupling extends substantially parallel to the transport path.

10. Device (10) according to any one of the preceding claims, **characterized in that** the processing device (12) has at least one milling device (12) for milling a longitudinal side or/and a transverse side of a panel.

## Revendications

1. Un dispositif (10) pour la fabrication ou/et l'usinage de panneaux, comprenant un dispositif de transport pour transporter des panneaux le long d'une voie de transport ainsi qu'un dispositif d'usinage (12) pour usiner les panneaux, pendant leur déplacement par le dispositif de transport,
où le dispositif de transport présente deux moyens de convoyage à doubles courroies (14, 16) avec une courroie sans fin supérieure (36) et une courroie sans fin inférieure (42), qui présentent chacune un tronçon de transport (38, 40) essentiellement parallèle à la voie de transport et qui sont articulés aux deux extrémités du tronçon de transport (38, 40) à chaque fois par des dispositifs de déflexion (24, 26, 28, 30),
où les courroies sans fin supérieures (36) des deux moyens de convoyage à doubles courroies (14, 16) viennent en contact avec un panneau à transporter sur sa face supérieure et les courroies sans fin inférieures (42) des deux moyens de convoyage à doubles courroies (14, 16) viennent en contact avec le panneau sur sa face inférieure,
**caractérisé en ce qu'**au moins une des courroies sans fin (36, 42) est guidée sur son tronçon de transport (38, 40) au moyen d'une pluralité de galets de guidage (48) disposés entre les dispositifs de déflexion (24, 26, 28, 30), et qu'une pluralité de galets de guidage (48), de préférence deux galets de guidage (48) sont montés dans au moins une cassette de galets (50)
et
que les galets de guidage (10) comprennent une rainure circulaire (52) pour recevoir les courroies sans fin (36, 42).

2. Dispositif (10) selon la revendication 1, **caractérisé en ce que** ladite au moins une cassette de galets (50) est montée au moyen de convoyage à doubles courroies (14, 16) dans au moins un des deux moyens de convoyage à doubles courroies (14, 16).

3. Dispositif (10) selon une des revendications précédentes, **caractérisé en ce qu'**au moins un des deux moyens de convoyage à doubles courroies (14, 16) comprend un cadre (32, 34) et un dispositif de réglage des galets monté ou formé au cadre (32, 34) au moyen duquel la situation ou/et l'orientation de l'axe de galet (56) d'au moins un des galets de guidage (48) peut être ajustée par rapport au cadre (32, 34).

4. Dispositif (10) selon la revendication 3, **caractérisé en ce que** le dispositif de réglage des galets est adapté pour ajuster les axes de galet (56) d'une pluralité de galets de guidage (48) simultanément.

5. Dispositif (10) selon les revendications 3 ou 4 et la revendication 2, **caractérisé en ce que** le dispositif de réglage des galets est adapté pour ajuster la situation ou/et l'orientation d'au moins une cassette de galets (50).

6. Dispositif (10) selon une des revendications précédentes, **caractérisé en ce que** l'épaisseur des courroies sans fin (36, 42), mesurée dans un sens orthogonal à la voie de transport et parallèle à un plan de panneau (P) est plus petite qu'environ 3 cm, de préférence entre environ 2,5 cm et environ 1 cm, et de manière encore plus préférée est de 1,5 cm.

7. Dispositif (10) selon une des revendications précédentes, **caractérisé en ce qu'**une distance (d) entre les deux moyens de convoyage à doubles courroies (14, 16) est réglable.

8. Dispositif (10) selon une des revendications précédentes, **caractérisé en ce que** la distance (d) entre les deux tronçons de transport (38) des courroies sans fin supérieures (36) des deux moyens de convoyage à doubles courroies (14, 16) ou/et la distance (d) entre les deux tronçons de transport (40) des courroies sans fin inférieures (42) des deux moyens de convoyage à doubles courroies (14, 16) peut être réglée sur une valeur inférieure à environ 5 mm, de préférence à une valeur entre environ 3 mm et environ 0,5 mm et de manière encore plus préférée à une valeur d'environ 1 mm.

9. Dispositif (10) selon une des revendications précédentes, **caractérisé en ce qu'**un/le cadre (32, 34) d'au moins un des moyens de convoyage à doubles courroies (14, 16) est connecté à un support (22) du dispositif (10) via au moins un accouplement à trou oblong (49), au moins un trou oblong de l'accouplement à trou oblong (49) s'étendant essentiellement parallèlement à la voie de transport.

10. Dispositif (10) selon une des revendications précédentes, **caractérisé en ce que** le dispositif d'usinage (12) comprend au moins un dispositif de fraisage (12) pour fraiser un côté longitudinal ou/et un côté transversal d'un panneau.
